Europäisches Patentamt

European Patent Office

Office européen des brevets

(19)

(11) Veröffentlichungsnummer: **0 000 397**
**B1**

(12) **EUROPÄISCHE PATENTSCHRIFT**

(21) Anmeldenummer: **78100385.0**

(22) Anmeldetag: **12.07.78**

(51) Int. Cl.³: **C 08 G 69/46**

(54) Verfahren zur Herstellung von Polyamiden

(30) Priorität: **16.07.77 DE 2732328**

(43) Veröffentlichungstag der Anmeldung:
**24.01.79 Patentblatt 79/02**

(45) Bekanntmachung des Hinweises auf die Patenterteilung:
**20.08.80 Patentblatt 80/17**

(84) Benannte Vertragsstaaten:
**BE CH DE FR GB NL**

(56) Entgegenhaltungen:
**DE - A - 2 501 348**

(73) Patentinhaber: **BASF Aktiengesellschaft**
**Carl-Bosch-Strasse 38**
**D - 6700 Ludwigshafen (DE)**

(72) Erfinder: **Cordes, Claus, Dr**
**Halbergstrasse 13**
**D - 6719 Weisenheim (DE)**
**Jeserich, Wolfgang-Dieter, Dr.**
**Anselm-Feuerbach-Strasse**
**D - 6710 Frankenthal (DE)**

Verfahren zur Herstellung von Polyamiden

Die Erfindung betrifft ein Verfahren zur Herstellung von Polyamiden durch Polymerisation von Caprolactam, Extraktion des Polymerisats mit Wasser, Aufkonzentrieren des Extrakts und Rückführen des Konzentrats in die Polymerisation.

Die bei der Polymerisation von ε-Caprolactam entstehenden Polyamide enthalten niedermolekulare Anteile, die aus Caprolactam und Oligomeren bestehen. In der Praxis werden diese niedermolekularen Anteile durch Extraktion mit heißem Wasser entfernt. Aus diesen Extraktionswässern kann man den Caprolactam-Anteil zurückgewinnen, reinigen und gegebenenfalls wieder in die Polymerisation einführen. Es ist auch möglich, durch Zusatz von spaltenden Reagenzien, die in den Extraktwässern enthaltenen Oligomeren zu Caprolactam umzusetzen, dieses gleichfalls zu isolieren, zu reinigen und wieder zu verwenden.

Die deutsch Patentanmeldung DE—A— 25 01 348 betrifft ein Verfahren zur Herstellung von Polyamiden durch Polymerisation von ε-Caprolactam, Extraktion des Polymerisats mit Wasser und Aufkonzentrieren des Wassers, Monomere und Oligomere enthaltenden Extrakts unter Ausschluß von Luftsauerstoff, wobei die extraktberührten Oberflächen in Werkstoffen ausgeführt sind, die sich unter den Bedingungen der Aufkonzentrierung inert verhalten, und das Konzentrat ohne weitere Reinigung oder Auftrennung allein oder gemeinsam mit anderen Polyamid bildenden Ausgangsstoffen polymerisiert wird.

Bevorzugt wird dabei das Konzentrat gemeinsam mit den Monomeren in die kontinuierliche Caprolactam-Polymerisation zurückgeführt. In der besonders bevorzugten Ausführungsform dieser Erfindung wird die Aufkonzentrierung mehrstufig durchgeführt, wobei in der letzten Stufe in einem Dünnschichtverdampfer ein Feststoffgehalt von mehr als 90% erreicht wird.

Es wurde nun gefunden, daß eine so weitgehende Aufkonzentrierung, die vor allem in der letzten Stufe technisch aufwendig und störungsanfällig ist, gar nicht notwendig ist, wenn man den Extrakt, der auf einen Feststoffgehalt von maximal 60 Gew.% aufkonzentriert wurde, vor der Polymerisation in einem Wärmeaustauscher kurzzeitig auf Temperaturen oberhalb von 140°C erhitzt und unmittelbar in die erste Stufe der Polymerisation einführt.

Das Verfahren wird angewandt bei der kontinuierlichen Polymerisation von ε-Caprolactam. Neben ε-Caprolactam können in untergeordneten Mengen auch andere Polyamid bildende Monomere wie Aminocarbonsäure, Lactame, Dicarbonsäuren und Diamine sowie deren Salze mitverwendet werden. Ferner können die üblichen Katalysatoren, Regler und sonstige Additive bei der Polymerisation zugegen sein. Besonders bevorzugt ist die Polymerisation in VK-Rohren (nach H. Klare, Synthetische Fasern aus Polyamiden, Akademie-Verlag Berlin 1963, S. 109 ff.), die drucklos oder mit einem Unterdruck von bis zu 0,5 bar oder einem Überdruck von bis zu 5 bar ausgeführt wird. In einer speziellen Variante des erfindungsgemäßen Verfahrens verwendet man ein VK-Rohr nach DE—B— 14 95 198.

Zur Ausführung des erfindungsgemäßen Verfahrens wird das nach dem Polymerisationsschritt anfallende, in der Regel granulierte Rohpolymerisat mit heißem Wasser diskontinuierlich oder kontinuierlich extrahiert. Die Extraktion kann dabei einstufig oder bevorzugt mehrstufig und gegebenenfalls auch unter Überdruck erfolgen. In einer bevorzugten Ausführungsform wird eine mehrstufige kontinuierliche Gegenstromextraktion angewandt. Die nach der Extraktion im allgemeinen mit einer Temperatur von 80 bis 110°C anfallenden Extraktionswässer enthalten normalerweise 0,5 bis 15 Gew.% Feststoff. Die Extraktionswässer werden dann auf Feststoffgehalte von maximal 60 Gew.% aufkonzentriert. Die Aufkonzentrierung kann einstufig oder bevorzugt mehrstufig erfolgen. Als Verdampfer eignen sich Röhrenverdampfer mit oder ohne Zwangsumlauf. wie z.B. Robert-Verdampfer, Fallstromverdampfer, Plattenverdampfer oder Entspannungsverdampfer.

In einer bevorzugten Ausführungsform erfolgt die Aufkonzentrierung 3- bis 4-stufig nach der Gleichstromschaltung mit Anfangstemperaturen von 150 bis 180°C und Drücken von 4 bis 10 bar derart, daß Endtemperaturen von 95 bis 120°C bei Drücken von 0,5 bis 2 bar und Konzentrationen von 45 bis 55 Gew.% erhalten werden. Bei der Extraktion und Aufkonzentrierung sind die in der DE—A—25 01 348 vorgeschriebenen Maßnahmen, wie strenger Ausschluß von Luftsauerstoff und ausschließlich Kontakt mit sich inert verhaltenden Werkstoffen einzuhalten. Nach einer Variante des Verfahrens können die erhaltenen Konzentrate mit ε-Caprolactam verdünnt werden.

Erfindungsgemäß wird das Konzentrat vor der Polymerisation in einem Wärmeaustauscher kurzzeitig auf Temperaturen oberhalb von 140°C, vorzugsweise zwischen 180°C und 280°C erhitzt. Dabei können übliche Wärmeaustauscher mit ausreichend dimensioniertem Wärmeübergang verwendet werden. Bevorzugt sind einfache Röhrenbündelwärmeaustauscher mit Vorrichtungen zur Gleichverteilung der Produktaufgabe auf die einzelnen Rohre, die von oben nach unten durchströmt werden. Als besonders vorteilhaft hat es sich erwiesen, die Wärmeaustauscher-Rohre über ihre gesamte Länge ober absatzweise bis auf Spalte von 1 bis 3 mm zu quetschen. Vorteilhafterweise mündet das untere Ende eines so gestalteten Wär-

meaustauschers direkt auf dem VK-Rohr-Kopf, der die erste Stufe der Polymerisation darstellt. Zur Beheizung des Wärmeaustauschers verwendet man z.B. gespannten Wasserdampf, ein dampfförmiges Gemisch aus Diphenyl und Diphenyloxid oder auch flüssige Wärmeträger, wie z.B. Öle. Die Eingangstemperatur des Wärmeträgers im Wärmeaustauscher soll vorzugsweise 190 bis 350°C, insbesondere 210 bis 300°C betragen. Es kann angenommen werden, daß durch die so erzeugten hohen Temperaturdifferenzen ein teilweiser Abbau der Oligomeren erfolgt. Bevorzugt werden Verweilzeiten von weniger als 10 Minuten, insbesondere von weniger als 3 Minuten angewandt. Im Wärmeaustauscher wird im wesentlichen Normaldruck eingehalten, bei Anwendung hoher Temperaturen kann es vorteilhaft sein, leicht erhöhte Drücke, z.B. bis zu 6 bar, einzuhalten.

Die erfindungsgemäß behandelten Konzentrate werden dann in den gerührten oberen Teil des VK-Rohres der kontinuierlichen Polymerisation zugegeben. Bei der erfindungsgemäßen Behandlung des Konzentrats im Wärmeaustauscher bildet sich Wasserdampf. Bevorzugt wird dieser Wasserdampf im VK-Rohr-Kopf mit den dort üblichen Vorrichtungen abgetrennt. Dabei ist es vorteilhaft, zur Vermeidung von Umweltbelastungen und von Substanzverlusten das in dem Wasserdampf tensionsmäßig enthaltene Caprolactam durch Teilkondensation oder Fraktioneierung zurückzuhalten

Nach dem erfindungsgemäßen Verfahren werden in der Gesamtbilanz die eingesetzten Monomeren vollständig in Polymeres umgewandelt, wobei keine Extraktwässer anfallen, die die Ausbeute vermindern und die Umwelt belasten. Das Verfahren zeichnet sich durch seine Einfachheit und Betriebssicherheit aus, da keine Apparate mit bewegten Teilen erforderlich sind. Ein ganz wesentlicher und überraschender Vorteil des erfindungsgemäßen Verfahrens ist, daß die der Polymerisation zugesetzten Konzentrate die Polymerisation von Caprolactam katalysieren. Die Durchsatzleistung bei der kontinuierlichen Polymerisation von Caprolactam kann dadurch erheblich gesteigert werden, je nach den gewählten Bedingungen um zwischen 10 und 60%. Besonders günstig ist, daß die zu behandelnden Extraktwässer unter den erfindungsgemäßen Bedingungen stets homogen einphasig sind und nicht zu Ablagerungen und Verstopfungen neigen. Ein weiterer Vorteil des erfindungsgemäßen Verfahrens gegenüber dem Verfahren nach der DE—A—25 01 348 liegt darin, daß aufwendige und teuere Vorrichtungen zur Abtrennung und Rückgewinnung von Lactamdämpfen nur einmal, nämlich in Kondensationsverfahren selbst und nicht nochmals in der Aufkonzentrierung von Extraktwässern auf hohe Feststoffkonzentrationen erforderlich sind.

Die in den Beispielen genannten Teile und Prozente beziehen sich auf das Gewicht.

**Beispiel 1 (Vergleichsversuch)**

Für die Durchführung der Beispiele wurde ein VK-Rohr gemäß der DAS 14 95 198 verwendet. Die oberste Zone des VK-Rohres mit dem vergrößerten Durchmesser (VK-Rohr-Kopf) wurde gerührt. Der zylindrische, nicht gerührte VK-Rohr-Teil war durch Wärmeaustauscher in 3 Zonen unterteilt, die von oben nach unten mit steigenden Zahlen bezeichnet werden. Die Temperaturen bei dem Versuch betrugen:

VK-Rohr-Kopf: 257 bis 259°C; Zone 1: 259 bis 264°C; Zone 2: 270 bis 278°C; Zone 3: 266 bis 271°C.

Der VK-Rohr-Kopf war mit einer Füllkörperkolonne versehen, um durch Teilkondensation Lactamdämpfe zurückzuerhalten. Der Druck nach Kolonne wurde auf 100 mm Wassersäule gehalten. Der Zulauf bestand aus 100 Gewichtsteilen/Zeiteinheit ε-Caprolactamschmelze mit 90°C, die 0,5 Gewichtsteile Wasser und 0,3 Gewichtsteile Benzoesäure als Katalysator enthielten. Das ausgetragene Endprodukt wurde granuliert, mit heißem Wasser extrahiert und getrocknet. Der K-Wert (nach Fikentscher, Cellulosechemie *13*, 58 (1932) 1%ig in 96%iger Schwefelsäure) berrug 69. Die Ausbeute an Polymerem, bezogen auf den Caprolactamzulauf, betrug 89,5%.

**Beispiel 2 (Vergleichsversuch)**

Es wurden die gleichen Bedingungen wie bei Beispiel 1 gewählt. Der Zulauf und damit der Durchsatz wurde auf 150 Gewichtsteile/Zeiteinheit erhöht. Der K-Wert nach Extraktion fiel dadurch aif 67 ab. Die Ausbeute an Polymerem, bezogen auf den Caprolactamzulauf, betrug 86,5%.

**Beispiel 3**

Es wurden die gleichen Bedingungen wie in Beispiel 1 gewählt. Der Zulauf zum VK-Rohr betrug 135 Gewichtsteile/Zeiteinheit. Die aus der Extraktion des Rohpolymerisats mit heißem Wasser erhaltenen Extraktwässer wiesen einen Feststoffgehalt von 5% auf. Diese Wässer wurden unter strengem Ausschluß von Luftsauerstoff durch Stickstoffab-deckung einem Umlaufverdampfer zugeführt. Alle extratkberührten Teile waren in V2A ausgeführt. Der Umlaufverdampfer wurde mit Dampf beheizt. Die Beheizung wurde so bemessen, daß sich eine Festoffkonzentration von 50 bis 55% und eine Temperatur von ca. 100 bis 105°C bei einem Überdruck von 200 mm Wassersäule einstellte. Dieses Konzentrat wurde mit einer Temperatur von 100°C aus dem Umlaufverdampfer kontinuierlich von oben einem auf dem VK-Rohr-Kopf aufgesetzten Röhrenbündelverdampfer zugeführt. Die Menge an Konzentrat betrug zwischen 25 und 30 Gewichtsteilen/Zeiteinheit. Der Rührenbündelwärmetauscher wurde mit einem dampfförmigen Gemisch aus Diphenyl und Diphenyloxid beheizt. Die Eingangstemperatur des Dampfes in den Wärmeaustauscher betrug 260°C, die Temperatur des ablaufenden Kondensates betrug 250°C. Die Verweilzeit lag bei etwa 1 min. Uber die Kolonne am VK-Rohr-Kopf wurden 12 bis 15 Gewichtsteile pro Zeiteinheit Wasser ausgetragen.

Aus dem VK-Rohr wurden ca. 150 Gewichtsteile Rohpolymerisat ausgetragen das nach der Extraktion und Trocknung einen K-Wert von 69 hatte. Die Ausbeute an Polymerem, bezogen auf Caprolactamzulauf, betrug 99 bis 100%.

Das so hergestellte Poly - $\varepsilon$ - Caprolactam zeigte die gleiche helle Eigenfarbe wie das gemäß Beispiel 1 hergestellt. In der Schmelzviskosität und den Eigenschaften der aus diesen Polyamiden hergestellten Formteilen ergab sich kein Unterschied. Im Vergleich dazu zeigten die Produkte gemäß Beispiel 2 eine niedere Schmelzviskosität und daraus hergestellt Fertigteile eine geringere Zähigkeit.

**Patentansprüche**

1. Verfahren zur Herstellung von Polyamiden durch kontinuierliche Polymerisation von $\varepsilon$-Caprolactam, Extraktion des Polymerisates mit Wasser, Aufkonzentrieren des Extraktes, welcher, Wasser, Monomere und Oligomere enthält, wobei die extraktberührten Oberflächen in Werkstoffen ausgeführt sind, die sich unter den Bedingungen der Aufkonzentrierung inert verhalten, und Rückführen des Konzentrates in die Polymerisation ohne weitere Reinigung oder Auftrennung, *dadurch gekennzeichnet*, daß man den auf einen Feststoffgehalt von maximal 60 Gew.% aufkonzentrierten Extrakt in einem Wärmeaustauscher kurzzeitig auf Temperaturen oberhalb von 140°C erhitzt, wobei eine Temperatur von 280°C nicht überschritten werden soll und dann unmittelbar in die erste Stufe der Polymerisation einführt.

2. Verfahren nach Anspruch 1, *dadurch gekennzeichnet*, daß man den 0,5 bis 15 Gew.% Feststoff enthaltenden Extrakt so aufkonzentriert, daß man Konzentrate mit 45 bis 55 Gew.% Feststoffgehalt bei Temperaturen von 95 bis 120°C erhält.

3. Verfahren nach Anspruch 1, *dadurch gekennzeichnet*, daß man die Verweilzeiten im Wärmeaustauscher <10, vorzugsweise <3 Minuten hält.

4. Verfahren nach Anspruch 1, *dadurch gekennzeichnet,* daß die Eingangstemperatur des Wärmeträgers im Wärmeaustauscher 190 bis 350°C, vorzugsweise 210 bis 300°C beträgt und der Wärmeaustauscher aus parallelen Rohren besteht.

5. Verfahren nach Anspruch 1, *dadurch gekennzeichnet*, daß die Polymerisation in einem im wesentlichen bei Normaldruck betriebenen VK-Rohr durchgeführt wird und die Zugabe des Konzentrates im VK-Rohr-Kopf erfolgt.

**Revendications**

1.Procédé de préparation de polyamides par polymérisation continue de la ℗-caprolactame, extraction du polymère à l'aide d'eau, concentration de l'extrait aqueux, contenant du monomère et des oligomères, dans un appareillage, dont les surfaces venant en contact avec l'extrait sont réalisées en des matériaux qui se comportent comme des matériaux inertes dans les conditions opératoires de cette concentration, le concentrat étant recyclé sans autre purification ou séparation dans la phase de polymérisation, caractérisé en ce que l'extrait, concentré jusqu'à une teneur en matières solides d'au plus 60% en poids, est chauffé pendant une courte durée, dans un échangeur de chaleur, à une température supérieure à 140°C, mais ne dépassant pas 280°C, avant d'être immédiatement introduit dans le premier stade de polymérisation.

2. Procédé suivant la revendication 1, caractérisé en ce que l'extrait avec une teneur en matières solides comprise entre 0,5 et 15% en poids est transformé en un concentrat d'une teneur en matières solides de 45 à 55% en poids à une température comprise entre 95 et 120°C.

3. Procédé suivant la revendication 1, caractérisé en ce que la durée de séjour de l'extrait dans l'échangeur de chaleur est inférieure à 10 mn et de préférence inférieure à 3 mn.

4. Procédé suivant la revendication 1, caractérisé en ce que l'échangeur de chaleur est constitué d'un faisceau de tubes parallèles, dans lequel le fluide caloporteur est introduit à une température comprise entre 190 et 350°C et de préférence entre 210 et 300°C.

5. Procédé suivant la revendication 1, caractérisé en ce que la polymérisation est essentiellement réalisée dans un tube "VK", dans lequel règne une pression normale et qui est alimenté en concentrat par sa partie supérieure ou tête.

**Claims**

1. A process for the production of polyamides by continuously polymerizing $\varepsilon$-caprolactam, extracting the polymer with water, concentrating the extract containing water, monomers and oligomers, the surfaces contacted by the extract being made of materials which are inert under the conditions of concentration, and recycling the concentrate to the polymerization zone without further purification or separation, *characterized in that* the extract concentrated to a solids content of at most 60% by weight is heated in a heat exchanger, for a short period, at a temperature above 140°C but not exceeding 280°C, and then directly introduced into the first polymerization stage.

2. A process as claimed in claim 1, *characterized in that* the extract containing 0.5 to 15% by weight of solids is concentrated to such an extent that concentrates having a solids content of 45 to 55% by weight at a temperature of 95 to 120°C are obtained.

3. A process as claimed in claim 1, *characterized in that* the residence times in the heat exchanger being maintained at less than 10, preferably less than 3, minutes.

4. A process as claimed in claim 1, *characterized in that* the entry temperature of the heat carrier in the heat exchanger is 190 to 350°C, preferably 210 to 300°C, and the heat exchanger consists of parallel tubes.

5. A process as claimed in claim 1, *characterized in that* the polymerization is carried out in a precondensation tube operated at substantially atmospheric pressure and the concentrate is introduced at the top of the precondensation tube.